(19) 

Europäisches
Patentamt
European
Patent Office
Office européen
des brevets

(11) **EP 4 101 643 B1**

(12) **EUROPEAN PATENT SPECIFICATION**

(45) Date of publication and mention
of the grant of the patent:
**25.06.2025 Bulletin 2025/26**

(21) Application number: **21750557.7**

(22) Date of filing: **05.02.2021**

(51) International Patent Classification (IPC):
**B32B 27/12** $^{(2006.01)}$ **B32B 5/02** $^{(2006.01)}$
**B32B 7/02** $^{(2019.01)}$ **B32B 7/12** $^{(2006.01)}$
**B60R 21/235** $^{(2006.01)}$ **D03D 13/00** $^{(2006.01)}$

(52) Cooperative Patent Classification (CPC):
**D03D 1/02; B32B 5/024; B32B 5/06; B32B 7/02;
B32B 7/022; B32B 7/027; B32B 7/12; B32B 27/08;
B32B 27/12; B32B 27/32; B32B 27/34;
B32B 27/36; B60R 21/235; D03D 13/008;
D03D 15/283;** (Cont.)

(86) International application number:
**PCT/JP2021/004432**

(87) International publication number:
**WO 2021/157725 (12.08.2021 Gazette 2021/32)**

(54) **AIRBAG BASE CLOTH AND AIRBAG INCLUDING SAME**

AIRBAG-GRUNDGEWEBE UND AIRBAG DAMIT

TISSU DE BASE POUR COUSSIN DE SÉCURITÉ GONFLABLE ET COUSSIN DE SÉCURITÉ
GONFLABLE LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.02.2020 JP 2020019526**

(43) Date of publication of application:
**14.12.2022 Bulletin 2022/50**

(73) Proprietor: **Asahi Kasei Kabushiki Kaisha
Tokyo 1000006 (JP)**

(72) Inventors:
• **SATO, Yusuke
Tokyo 100-0006 (JP)**

• **ITO, Miyuki
Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
WO-A1-2018/204154 WO-A1-2019/065880
WO-A1-2019/167820 JP-A- 2008 150 754
JP-A- 2008 150 754 JP-A- 2009 062 643
KR-A- 20140 070 444 US-A1- 2017 298 542

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
   **D03D 15/44; D03D 15/573; D06N 3/045;**
   **D06N 3/08; D06N 3/106; D06N 3/123; D06N 3/125;**
   **D06N 3/183;** B32B 2262/0261; B32B 2274/00;
   B32B 2307/718; B32B 2307/724; B32B 2307/732;
   B32B 2605/08; B60R 2021/23538;
   B60R 2021/23542; B60R 2021/23576;
   D06N 2211/268; D10B 2331/02; D10B 2401/063;
   D10B 2505/124

**Description**

FIELD

The present invention relates to an airbag base cloth for constructing an airbag cushion used in an airbag device for mitigating the impact on the human body in a collision of an automobile or the like as well as to an airbag comprising said airbag base cloth.

BACKGROUND

As devices for mitigating the impact on the human body in collisions in vehicles such as automobiles, airbag devices are increasingly installed in vehicles. As air bag devices which expand due to gas and which absorb and mitigate the impact on the human body in the event of a collision, in addition to driver and passenger-side airbag devices, the installation of airbag devices in vehicles such as curtain airbags, side airbags, knee airbags, and rear airbags has been put into practical use for occupant protection. Further, for pedestrian protection, in the event of a side collision on the side opposite the installation side (far side) of an airbag device or car seat having an airbag cushion which inflates to the outside of the vehicle cabin, a far-side airbag device composed of an airbag cushion that restricts the movement of an occupant seated in the direction opposite to the collision side to the collision side has been proposed.

The airbag cushions of these airbag devices are folded and stored in small packages during normal operation. When a sensor detects a collision and the airbag cushion expands and inflates, the airbag cushion is released by breaking through a cover part of the storage location while the folding is expanded by gas generated by an inflator, and when fully inflated, it will catch the human body.

In recent years, the size of airbag cushions has been increasing so that airbag devices can respond to a wide range of collision conditions, and there is a demand for an airbag cushion which has a compact storage size and which is lightweight.

There is also an increasing demand to improve safety by controlling the leakage of deployment gas and maintaining internal pressure for long periods of time to achieve a wide range of timings for restraining the human body. In addition to driver seat and passenger seat airbags which control gas pressure with vent holes, in curtain airbags, pedestrian airbags, far-side airbags, etc., which do not have vent holes, it is particularly important to suppress leakage of deployment gas. In airbag base cloths, suppressing the opening of the base cloth and gas leakage from the sewn part in high pressure deployment is a problem to be solved.

Furthermore, in recent years, silicone-coated base cloths in which a fabric is coated with silicone have been generally used in airbags in order to suppress gas leakage. However, silicone-coated base cloths have insufficient internal pressure retention under high pressure due to uneven coating and breakage of the silicone due to the opening of the base cloth. Furthermore, when a large amount of silicone is coated in order to solve this problem, there is a problem that the weight and thickness of the base cloth are increased, whereby the weight and storability of the airbag are deteriorated.

Conversely, Patent Literature 1 below proposes an airbag base cloth laminated on a film. Though the base cloth has excellent internal pressure retention at high pressure since the film, which is a continuous body, covers the fabric, there is a problem in that the base cloth is harder and the air bag cushion is less storable due to the characteristics of the film material itself and the laminate, as compared to silicone-coated base cloths. Furthermore, when the film is made thinner for flexibility, adhesiveness and rubbing resistance may deteriorate, or pinholes may occur due to the inability to withstand the heat and pressure during thermal laminating, whereby the internal pressure retention at high pressure may deteriorate.

Further, there is problem in that regardless of whether it is a silicone-coated base cloth or a film-laminated base cloth, high pressure is applied to the sewn part when the airbag is deployed, whereby the base cloth is pulled by the sewing threads, which open, and gas leakage deteriorates the internal pressure retention. Furthermore, base cloths laminated with a film tend to be stressed by the insertion of the sewing needle, whereby a part of the film can become broken and peeled away, resulting in an increase in gas leakage.

[PTL 2] discloses a base fabric for an airbag including a woven fabric and a resin layer containing a thermoplastic resin and laminated at least on a part thereof.

[PTL 3] discloses a method for producing a woven fabric comprising weaving fibers in a warp direction and a weft direction to form a fabric having a top surface and a bottom surface, wherein the warp fibers and weft fibers each comprise one or more filaments of a synthetic polymer having substantially uniform cross-sectional composition.

[PTL 4] discloses a base fabric for an air bag having at least one surface having an aqueous polyurethane resin having 1-25 pts.wt. of a compound having a carboxyl group and a hydroxyl group in the molecule and 1-20 pts.wt. of a polycarbodiimide compound based on 100 pts.wt. of a polycarbonate polyol having a melting point of 20°C or lower and a polyisocyanate in total.

[PTL 5] discloses a laminating fabric for a side curtain air bag and, especially, to a laminating fabric for a side curtain air bag having a multilayer laminating layer including a specific thermoplastic polymer film on the surface of the fabric.

[CITATION LIST]

[PATENT LITERATURE]

[PTL 1] Japanese Unexamined PCT Publication (Kohyo) No. 2005-535488
[PTL 2] JP2008150754 A
[PTL 3] WO2018/ 204154 A1
[PTL 4] JP2009062643 A
[PTL 5] KR20140070444 A

SUMMARY

[TECHNICAL PROBLEM]

In light of the level of background technology described above, an object of the present invention is to provide an airbag base cloth constituting an airbag cushion which is flexible and lightweight, has suitable storability, and has good high-pressure deployability after heat resistance and moisture resistance treatment, and further, to provide an airbag base cloth constituting an airbag cushion having excellent internal pressure retention after sewing.

[SOLUTION TO PROBLEM]

As a result of rigorous investigation to achieve the object, the present inventors have unexpectedly discovered that the object can be achieved by an airbag base cloth having the following characteristics, and have completed the present invention.
The present invention is a defined in the appended independent claims, and preferred embodiments in the appended dependent claims.

[ADVANTAGEOUS EFFECTS OF INVENTION]

When an airbag cushion is produced with the airbag base cloth according to the present invention, the base cloth and sewn parts do not open under high pressure, whereby an air bag cushion with excellent airtightness and pressure resistance can be achieved, a lightweight air bag cushion with excellent storability can be achieved, and in particular, an air bag base cloth suitable for use in side curtain airbags, pedestrian airbags, and far side airbags, which require internal pressure retention and storability, can be obtained.

BRIEF DESCRIPTION OF DRAWINGS

FIG. 1 is a view during evaluation of the thickness of a fold part of a base cloth.
FIG. 2 is a view of sample preparation during evaluation of static air permeability after sewing machine needle piercing.
FIG. 3 shows a base cloth cutting position during evaluation of the base cloth cut cross-sectional thickness ratio by SEM.
FIG. 4 is a cross-sectional view of a cut base cloth cut during evaluation of the base cloth cut cross-sectional thickness ratio by SEM.
FIG. 5 is a plan view of a side curtain airbag used in the Examples.

DESCRIPTION OF EMBODIMENTS

The embodiments of the present invention will be described in detail below.
The airbag base cloth according to the invention is an airbag base cloth in which at least one surface of a fabric is covered with a multilayer film having an adhesive layer, wherein an average value of warp and weft edgecomb resistance of the base cloth is 450 N/2.5 cm or more to 1000 N/ 2.5 cm or less.

The total fineness of the fibers constituting the airbag base cloth is preferably 200 dtex to 600 dtex, and more preferably 300 dtex to 500 dtex. When the fineness is 200 dtex or more, strength of the base cloth is sufficient, and conversely, when the fineness is 600 dtex or less, the deployment speed will not be inhibited. Furthermore, the lower the total fineness, the lower the hardness and basis weight of the base cloth.

The filament fineness of the fibers constituting the airbag base cloth is preferably 2.0 dtex to 7.0 dtex, and more preferably 2.0 to 4.0 dtex. When the filament fineness is 2.0 dtex or more, the filament will not be damaged by the sewing needle during sewing, and the strength of the sewn portion (the boundary between the inflated part and the non-inflated part) will not be reduced and will not be destroyed during deployment, and conversely, when the filament fineness is 7.0 dtex or less, the permeation amount does not increase and the deployment speed is not inhibited. Further, the smaller the filament fineness, the lower the hardness of the base cloth. Furthermore, the smaller the filament fineness, the less the crimp of the fabric, the flatter the surface, and the better the adhesion to the film. Furthermore, in order to flatten the fabric, filaments having a cross-sectional shape such as a flat shape or a polygonal shape, such as a triangular or pentagonal shape, may be used.

The cover factor (CF) of the airbag base cloth is preferably 1800 to 2400, more preferably 1900 to 2300, and further preferably 2200 or less from the viewpoint of achieving both mechanical properties or internal pressure retention and hardness. When the cover factor is 1800 or more, the necessary base cloth strength and airtightness for airbags can be obtained. Conversely, as the cover factor is minimized in the range of 2400 or less, the softness of the base cloth increases. Further, the lower the cover factor, the lighter the weight of the base cloth, and thus, a cover factor of 2400 or less is preferable. The cover factor (CF) is expressed by the following formula.

$$CF = \sqrt{(d)} \times (2 \times W)$$

In the formula, d is the warp and weft average total fineness (dtex) of the constituent yarns, and W is the warp and weft average density (threads/2.54 cm).

The cover factor of the airbag base cloth refers to the cover factor of the fabric constituting the base cloth.

The airbag base cloth according to the invention is an airbag base cloth in which a fabric is covered with a multilayer film. It is preferable that the film is covered by lamination processing.

The multi-layer film covering the fabric is composed of at least two layers, of which the layer which adheres to the fabric is referred to as the "adhesive layer", and the layer exposed on the outermost surface of the film surface of the airbag base cloth is referred to as the "outer layer."

The multilayer film may have a two-layer structure of an adhesive layer/outer layer in which an adhesive layer and an outer layer are laminated, a three-layer structure of an adhesive layer/intermediate layer/outer layer, or a five-layer structure of an adhesive layer/a glue layer/an intermediate layer/a glue layer/an outer layer. Further, layers other than those described above may be further included. The multilayer film will be described below.

(Adhesive Layer)

The adhesive layer is a layer which receives heat from heating rollers during heat lamination, melts and softens, and adheres to the surface of a fabric. The adhesive layer preferably contains a resin having a glass transition temperature of 0 to 80 °C and a melting point of 100 to 160 °C (herein, referred to as "resin A") from the viewpoints of blocking property, adhesiveness and flexibility. The adhesive layer may contain another resin (herein, referred to as "resin B") in addition to the resin A. Resin A and resin B may each be of one or a plurality of types. The adhesive layer may be composed of only resin A, or may further contain resin B and additives described below.

The glass transition temperature of resin A is preferably 0 to 80 °C, more preferably 10 to 70 °C, and further preferably 20 to 60 °C. When the glass transition temperature is 0 °C or higher, the blocking resistance of the film is further suppressed. Such temperature is also preferable from the viewpoint of scrubbing resistance of the airbag base cloth and suppressing deterioration of the adhesion between the film and fabric in moist heat environments. Furthermore, the film and airbag base cloth have good settability by folding and little repulsion. Conversely, by maintaining the glass transition temperature to within 80 °C, the flexibility of the airbag base cloth is excellent. The glass transition temperature can be measured by the method described in the Examples, which are described later.

When there are a plurality of types of resin A, the glass transition temperature of each resin A may be the same or different.

The melting point of the resin A is preferably 100 to 160 °C, more preferably 110 to 150 °C, and further preferably 120 to 140 °C. By setting the melting point to 100 °C or higher, the strength of adhesion with the base cloth can be maintained even in high temperature usage environments, and the range of conditions (also called process window) such as temperature, pressure, and time during laminating can be widened, whereby a multi-layer film with stable quality can be obtained. Conversely, when the temperature is set to 160 °C or lower, the temperature required for laminating does not become excessively high, whereby damage due to heat to fabric and film can be suppressed.

The melting point can be measured by the method described in Examples, which are described later.

When there are a plurality of types of resin A, the melting points thereof constituting resin A may be the same or different. When a plurality of types of resin A are included and there are a plurality of melting peaks, the melting peak temperature on the high temperature side of resin A is preferably 100 to 160 °C, more preferably 110 to 150 °C, and further preferably 120 to 140 °C.

As the resin A, a polyamide-based resin is used because the changes in characteristics such as flexibility and adhesiveness are small with respect to changes in temperature and humidity in the usage environment. The adhesive layer of the multilayer film comprised in the airbag base cloth of the claimed invention contains a polyamide-based resin. Thereamong, as the polyamide-based resin, a copolymerized polyamide (a-1), a dimer acid-based polyamide (a-2), or a thermoplastic polyamide elastomer (a-3) is preferable, and from the viewpoints of flexibility, adhesiveness, internal pressure retention at high pressure, and cost, a copolymerized polyamide (a-1) is more preferable.

Examples of the copolymerized polyamide (a-1) include copolymerized polyamides obtained by copolymerizing two or more monomer components which are known as monomer components constituting an aliphatic polyamide (for example, monomer components constituting polyamide 6, polyamide 66, polyamide 610, polyamide 11, and polyamide 12), as well as polyamide 6/66, polyamide 6/12, polyamide 6/11, and polyamide 6/66/11.

Examples of the dimer acid-based polyamides (a-2) include those obtained using raw materials obtained by dimerizing a fatty acid of a natural vegetable oil (an unsaturated fatty acid having 18 carbon atoms (for example, oleic acid and linoleic acid)).

Examples of the thermoplastic polyamide elastomer (a-3) include thermoplastic polyamide elastomers containing a polyether in a soft segment (amorphous phase) and a polyamide component in a hard segment (crystal phase) (including dimer acid-based thermoplastic polyamide elastomers).

Thereamong, polyamide 6/12 is preferable from the viewpoint of particularly excellent flexibility, adhesiveness, and internal pressure retention at high pressure.

The viscosity number of the polyamide resin used in the adhesive layer is 50 to 200 ml/g, more preferably 80 to 180 ml/g, and further preferably 100 to 150 ml/g. When the viscosity number is 50 ml/g or more, the melted resin does not permeate excessively into the fabric, whereby the airbag base cloth does not become too hard. Conversely, when the viscosity number is 200 ml/g or less, the adhesive layer permeates into the filaments of the fabric surface layer, whereby sufficient adhesiveness can be obtained by the anchor effect. The viscosity number is a value obtained according to ISO307, and is the viscosity number when the polyamide-based resin is dissolved in a 96% sulfuric acid aqueous solution in an amount of 0.5% by mass.

The adhesive layer may include resin B in addition to the resin A. Examples of resin B used in this case include acid-modified polyolefins, ionomers, and thermoplastic polyamide elastomers. From the viewpoint of flexibility and adhesiveness in low temperature environments, the glass transition temperature thereof is preferably 40 °C or lower, more preferably 30 °C or lower, and further preferably 20 °C or lower. The melting point is preferably in the range of 80 to 160 °C.

The mass ratio of resin B in the adhesive layer (100% by mass) is preferably 90% by mass or less, more preferably 80% by mass or less, and further preferably 70% by mass or less from the viewpoint of adhesiveness.

The adhesive layer may appropriately include various additives such as anti-blocking agents, lubricants, crystal nucleating agents, flame retardants, antistatic agents, antioxidants, ultraviolet absorbers, light stabilizers, colorants, and fillers, as long as the practical properties such as adhesiveness are not impaired thereby. Thereamong, from the viewpoint of further improving the blocking resistance of the adhesive layer, an anti-blocking agent, a crystal nucleating agent, and/or a lubricant are preferably included, an anti-blocking agent and/or a crystal nucleating agent are more preferably included, and an anti-blocking agent and a crystal nucleating agent are further preferably included.

Examples of the anti-blocking agents include organic particles such as crosslinked polystyrene, crosslinked acrylic (PMMA) resin, and fluorine (PTFE) particles, silica particles, and inorganic particles of kaolin and calcium carbonate.

Examples of crystal nucleating agents include talc, alumina, kaolin, and high melting point polyamides (for example, polyamides having a melting point of higher than 160 °C).

Examples of lubricants include aliphatic amides and metal soaps.

The mass ratio of resin A (for example, a copolymerized polyamide) relative to 100 mass% of the adhesive layer is, from the viewpoint of adhesiveness and blocking resistance, preferably 10 mass% or more, more preferably 20 mass% to 100 mass%, and further preferably 30 mass% to 100 mass%.

From the viewpoint of adhesiveness and blocking resistance, the mass ratio of additives in the adhesive layer (100% by mass) is preferably 30% by mass or less, more preferably 20% by mass or less, and further preferably 10% by mass or less.

(Outer Layer)

It is necessary that the outer layer be composed of a resin having a melting point higher than that of the adhesive layer from the viewpoint of preventing adhesion to rollers and preventing pinholes by melting during the heat laminating process.

The melting point of the resin used in the outer layer is preferably at least 20 °C higher, more preferably at least 25 °C higher, and further preferably at least 30 °C higher than the melting point of resin A. The melting point of the resin used in the outer layer is determined by the ease of fusion (adhesion) to the heating rollers used in the laminating process with fabric, and by using a resin having a melting point which is at least 20 °C higher than the melting point of resin A, fusion to the heating rollers is unlikely to occur, whereby stable laminating can be achieved.

Note that when a plurality of types of resin A are contained in the adhesive layer and/or when a plurality of types of resin are contained in the outer layer, the melting point described above is the processing melting peak temperature, which is the melting peak temperature appearing on the highest temperature side among the melting peak temperatures of the plurality of types of resins contained in the layer.

Since the outer layer becomes the outermost layer particularly when laminated on fabric, the flexibility of the outer layer affects the flexibility of the laminate base cloth. Thus, from the viewpoint of obtaining an outer layer with excellent properties such as flexibility, resistance to stress generated when folded, airtightness, sewing machine needle piercing resistance, strength, flame retardancy, and slipperiness, polyamide-based resins and polyester-based resins are preferable.

Examples of polyamide-based resins include the polyamide-based resins (a-1, a-2, a-3) exemplified as resin A contained in the adhesive layer, and these may be used alone or in a mixture of a plurality of types thereof.

As the polyester-based resin, a thermoplastic polyester elastomer is preferable, and examples thereof include types in which a polyether component is used in the soft segment (polyester-polyester types), and types in which a polyester component is used in the soft segment (polyester-polyester types).

(Intermediate Layer)

Examples of the intermediate layer include layers composed of a composition comprising one or a mixture of a plurality of polyolefin-based resins such as a linear low-density polyethylene, low-density polyethylene, medium-density polyethylene, high-density polyethylene, or polypropylene, acid-modified polyolefin-based resin, polyolefin copolymer resin, polyolefin-based thermoplastic elastomer, and acid-modified polyolefin-based elastomer, and from the viewpoint of flexibility, it is preferable to include a polyolefin copolymer resin and/or a polyolefin-based thermoplastic elastomer.

(Glue Layer)

The glue layer is a layer for joining each layer of the multilayer film, examples thereof include layers composed of an acid-modified polyolefin-based resin or/and a polyolefin-based thermoplastic elastomer having a polar functional group, such as acid-modified polyethylene and acid-modified polypropylene, and it is desirable that it be selected in consideration of the requirements for heat resistance in the intended application.

The glue layer may be a layer composed of one resin, or may be a layer containing a plurality of resins.

(Multilayer Film)

A multilayer film is a film having at least two layers. The flexibility of the multilayer film affects the storability of the airbag, and the base cloth laminated with a highly flexible film provides excellent performance in terms of compactness when the airbag is stored.

Further, the drag force of the film generated when the base cloth expands and contracts increases with the film thickness, which affects the number of repetitions until peeling. Thus, the thickness of the multilayer film is preferably 5 to 30 $\mu$m, more preferably 5 to 25 $\mu$m, and further preferably 5 to 20 $\mu$m. These ranges are determined by the balance between strength and flexibility. When the thickness is 5 $\mu$m or more, the mechanical properties of the film are sufficient, and when the thickness is 30 $\mu$m or less, the flexibility is suitable.

The weight of the multilayer film laminated on the airbag base cloth is preferably 5 to 30 $g/m^2$, more preferably 5 to 25 $g/m^2$, further preferably 5 to 20 $g/m^2$, and particularly preferably 5 to 15 $g/m^2$. When the weight of the film is 5 $g/m^2$ or more, sufficient adhesion to the fabric and high internal pressure retention can be obtained. Conversely, when the weight of the film is 30 $g/m^2$ or less, the base cloth does not become excessively hard.

Though it is preferable that the fabric be covered with a laminate, it is important to flatten the surface of the fabric before covering it with the film. By adhering the film to a fabric with a flat surface, the contact area between the film and fabric is increased, whereby sufficient adhesiveness can be obtained without applying excessive heat or pressure during thermal laminating, and the occurrence of pinholes can be suppressed. Since the generation of pinholes can be suppressed, application of the thin film becomes easy, whereby an airbag base cloth having excellent flexibility can be obtained. Furthermore, because the fabric is flat, heat and pressure can be applied evenly to the film during thermal laminating, whereby the resin component of the film does not penetrate deeply into the fabric, such as between the yarns, and fill the space thereby, and as a result, an airbag base cloth which is flexible and has suitable rubbing resistance can be obtained. Due to the thickness uniformity of the covered film, the stress on the film by the sewing needle is dispersed, reducing local breakage and peeling of the film, and opening of the stitches when stress is applied to the sewn part is also suppressed, whereby the internal pressure retention of the airbag cushion composed of sewing can be enhanced. Though the method of flattening is not limited, calendering is preferable in terms of convenience. The temperature at the time of calendering is preferably 100 °C or higher and 220 °C or lower. When the temperature is 100 °C or higher, the fabric structure after calendaring can be maintained, and when the temperature is 220 °C or lower, the fabric does not thermally deteriorate.

The linear pressure during calendering is preferably 0.5 to 15 kN/cm. When the pressure is 0.5 kN/cm or more, the fabric structure after calendering can be flattened and the adhesiveness with the film can be improved. Conversely, when the calendering pressure is 15 kN/cm or less, the fabric becomes paper-like and does not become hard.

Calendering is preferably applied to one side of the fabric, i.e., the side to be laminated. By applying calendering to one surface of the fabric, it is possible to prevent the fabric from becoming paper-like and becoming hard while maintaining the flatness required for adhesion to the film.

In the fabric, the surface flattened by the heat of laminating may be substantially restored to the surface condition before processing. However, the laminated film layer is covered with a substantially uniform film thickness along the unevenness of the fabric surface.

Examples of the laminating method include a thermal laminating method of continuously laminating by roll-to-roll laminating using heating rollers, and a vacuum laminating method of decompressing and laminating in a single operation, and it is preferable that the lamination method be carried out with the adhesive layer of the multilayer film and the synthetic fiber fabric (base cloth) in a temperature range of, for example, a heating temperature of 120 to 160 °C. The linear pressure at the time of laminating is preferably 0.01 to 1.5 kN/cm. When the linear pressure is 0.01 kN/cm or more, the adhesive force between the film and the base cloth will be exhibited, and when it is 1.5 kN/cm or less, it is possible to suppress the occurrence of pinholes in the film during lamination.

It is preferable to laminate the fabric immediately after calendering, whereby preventing the film from penetrating into the fabric between the yarns, and thus reducing the likelihood of making the base cloth hard, resulting in the fabric being easily folded. Furthermore, since it is possible to prevent the thickness of the film covering the fabric from becoming locally thin, it is possible to prevent the film from peeling due to tearing even if local stress due to needle piercing is received thereby.

Though calendering and laminating of the fabric may be performed as appropriate within the above range, in the laminating process, it is preferable to process at a higher temperature than calendering in order to melt and soften the adhesive layer of the film and obtain sufficient adhesion to the fabric, and in order to suppress pinholes in the film, it is preferable that the linear pressure be lower than in calendering.

The weight of the airbag base cloth of the present embodiment is preferably 140 g/m$^2$ or more and 240 g/m$^2$ or less. When the weight is 140 g/m$^2$ or more, the mechanical strength of the base cloth is unlikely to be insufficient, and when it is 240 g/m$^2$ or less, the weight of the airbag does not become excessive.

The warp and weft average value of the edgecomb resistance of the airbag base cloth according to the invention is 450 N/2.5 cm or more and 1000 N/2.5 cm or less, and preferably 450 N/2.5 cm or more and 950 N or less/2.5 cm. When the warp and weft average value of the edgecomb resistance of the base cloth is 350 N/2.5 cm or more, opening when stress is applied to the base cloth can be resisted, which contributes to low air permeability under high pressure. The edgecomb resistance of the airbag base cloth can be adjusted by the chemically designed adhesive strength with the multilayer film and fabric and the processing method such that the film has a substantially large adhesive area on the fabric surface.

In order to enhance the adhesive strength, it is preferable to select a copolymerized polyamide in the composition design of the multilayer film and use polyamide fibers in the fabric. Furthermore, as the processing method for increasing the adhesive area between the film and the fabric surface, it is also preferable to heat-laminate the fabric by subjecting it to calendering.

If the edgecomb resistance of the airbag base cloth is large, opening of the base cloth when the sewn airbag is deployed and the sewing thread is loaded can be reduced, which greatly contributes to the improvement of the internal pressure retention of the airbag.

Conversely, when the warp and weft average value of the edgecomb resistance is 1000 N/2.5 cm or less, the airbag can be sewn while suppressing the occurrence of extreme skipping and puckering.

Even if the airbag base cloth of the present embodiment is exposed to a harsh environment under high temperature and high humidity for a long time, it is necessary that it be able to withstand bending due to folding, vibration of a vehicle for a long time, and rubbing during air bag deployment. Thus, scrub resistance (rubbing resistance) is very important for internal pressure retention. In order to improve scrub resistance, it is important that not only is suitable adhesiveness between the film and fabric important, but also the flexibility of the film itself and the uniformness of the film thickness without partial thinning due to the local penetration of the film into the fabric, whereby the kneading stress not be concentrated at the interface between the film and fabric. The scrub resistance number of the airbag base cloth of the present embodiment is 600 strokes (repetitions) or more, preferably 800 strokes or more, and more preferably 1000 strokes or more. When the number of strokes is less than 600 strokes, a film peeling problem occurs, and when mounted on an automobile, the film surface is easily peeled off by external forces, or the film surface can easily be peeled by high temperature and high-pressure gas. As a result, it is not possible to maintain suitable internal pressure during airbag deployment, which may lead to abnormalities in the performance of protecting passengers in the event of a vehicle collision.

The ratio of the thickness when two layers of the airbag base cloth of the present embodiment are overlapped to the thickness of the fold part when the airbag base cloth is folded (fold part thickness/two layer overlapped thickness) is 2.0 or less, preferably 1.8 or less, and more preferably 1.7 or less. If the ratio of the thickness when two layers of the airbag base cloth are overlapped to the thickness of the fold part when the airbag base cloth is folded is 2.0 or less, the volume when the airbag base cushion is folded can be reduced, whereby an airbag with excellent storability can be obtained. This thickness ratio is selected in order to allow for a flexible fabric structure, so that the multilayer film is a lightweight thin film, to allow for flexibility in composition design of the multilayer film, and to prevent the base cloth from becoming rigid because the film does not penetrate into the fabric between the sewing threads during the laminating of the multilayer film.

The static air permeability of the airbag base cloth of the present invention when a hole is made by passing a sewing machine needle that is not threaded therethrough is 0.50 $L/dm^2$/min or less, preferably 0.40 $L/dm^2$/min or less, and further preferably 0.30 $L/dm^2$/min or less. When the static air permeability after needle piercing is 0.50 $L/dm^2$/min or less, gas leakage from the sewn part can be suppressed during air bag deployment. These values were selected so that the multilayer film is a lightweight thin film, to allow for flexibility in composition design of the multilayer film, and to prevent the thickness of the film covering fabric from becoming locally thin in the laminating of the multilayer film, so that local peeling can be prevented by the thickness uniformity of the covered film.

The air permeability of the base cloth of the air bag base cloth according to the invention at 300 kPa is 1.0 $L/cm^2$/min or less, more preferably 0.8 $L/cm^2$/min or less, and further preferably 0.7 $L/cm^2$/min or less. When the air permeability of the base cloth at 300 kPa is 1.0 $L/cm^2$/min or less, gas leakage due to opening from the base cloth during airbag deployment can be suppressed, which is useful for airbag cushions deployed at higher pressure. This is a result of the high edgecomb resistance and high scrub resistance of the airbag base cloth. The element wherein opening is suppressed by the cover and local peeling due to kneading is suppressed prevents cover peeling air permeability under high pressure loads.

In the SEM cross-section observation of the warp or weft width direction of the airbag base cloth of the present embodiment, when the distance from the bottom of the warp or weft in the width direction to the surface of the multilayer film is defined as A, and the distance from the surface of the multilayer film at the widthwise end of the warp or weft to the surface height of the multilayer film in the width direction center is defined as B, B/A is 0.20 to 0.60, more preferably 0.25 to 0.55, and further preferably 0.30 to 0.50. When B/A is 0.20 or more, the film is uniformly laminated along the surface of the base cloth, and the adhesive strength and edgecomb resistance are high. Furthermore, the film does not locally penetrate the crimp grooves, resulting in a flexible base cloth. The upper limit of B/A is 0.60 due to the structure of fabric. On the surface where the multilayer film of the airbag base cloth is covered, the cross section of the exposed warp cut at the center of the warp direction of the exposed part or the cross section of the exposed weft cut at the center of the weft direction of the exposed part is observed by SEM.

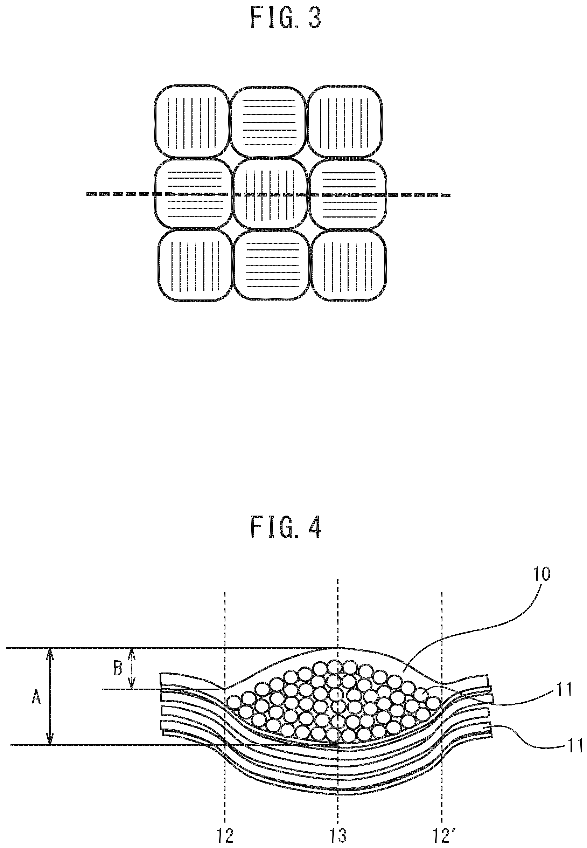

Note that as shown in FIG. 3, among the portions where the yarn observed by SEM is exposed on the surface side covered by the multilayer film, the center of the yarn direction is set as the base cloth cutting position when evaluating the B/A. The distance A to the surface of the multilayer film is the height from the bottom of the yarn to the surface of the resin layer at the center (13) of both ends in the width direction of the warp or weft (12, 12' in FIG. 4). The distance B from the surface of the multilayer film at the widthwise end of the warp or weft to the height of the multilayer film surface at the width direction center is the average of the distances at 12 or 12' in FIG. 4. B/A may be selected within the above range from among the average values of the numerical values measured five times for each of the warp and weft. It is preferable that five measurement points apart from each other at a distance of at least 10 cm or more be measured. If the base cloth to be measured is small and it is not possible to secure measurement points 10 cm or more apart, the average value of the values measured five times at different locations is used.

EXAMPLES

The present invention will be specifically described by way of Examples and Comparative Examples below, but the present invention is not limited to the following examples.

(1) Constituent Yarn Fineness

The apparent fineness of a yarn taken from the airbag base cloth from either the warp or weft is measured five times in accordance with Annex H of JIS L1096:2010, and the average value is defined as the fineness (dtex) of the constituent yarns.

(2) Filament Number

**[0081]** The cross section of the airbag base cloth is observed with a scanning electron microscope (VE-9800 manufactured by KEYENCE Corp.), the number of filaments of 10 weaving yarns is counted, and the most frequent number of filaments among the 10 yarns is defined as the filament number.

(3) Filament Fineness

The constituent yarn fineness is divided by the number of filaments to obtain the filament fineness (dtex).

(4) Weight (per unit area)

The weights of airbag base cloth (including the multilayer film) and multilayer film are obtained from the mass per unit area measured in accordance with 8.3.2 of JIS L1096:2010.

(5) Weaving Density

Weaving density is measured in accordance with annex FA of JIS L1096:2010, by method B of 8.6.1b).

(6) Cover Factor (CF)

The cover factor (CF) of the airbag base cloth is determined from the following formula:

$$CF = \sqrt{(d)} \times (2 \times W)$$

where d is the warp and weft average total fineness (dtex) of the constituent yarns, and W is the warp and weft average density (threads/2.54 cm).

(7) Edgecomb Resistance

Except for using a sample of airbag base cloth cut to a width of 25 mm and a length of 200 mm, measurement is performed five times in the warp and weft direction in accordance with ASTM D6479, and the average value of the ten measurements is set as the edgecomb resistance.

(8) Scrub after High Temperature and High Humidity Heat Treatment

The airbag base cloth is treated at 80 °C and 95%, high temperature and high humidity, for 400 hours. Then, using a scrub tester (manufactured by Imoto Machinery Co., Ltd.), measurement is performed five times for both warp and weft in accordance with ISO5981, and the average value is used as the scrub after high temperature and high humidity heat treatment. When the number of measurement when the laminate begins to peel off from the base cloth is less than 1000 repetitions, a numerical value is described, and when there is no peeling even after 1000 times, the scrub is described as 1000.

(9) Ratio of Two Layer Overlap Thickness to Fold Part Thickness of Airbag Base Cloth

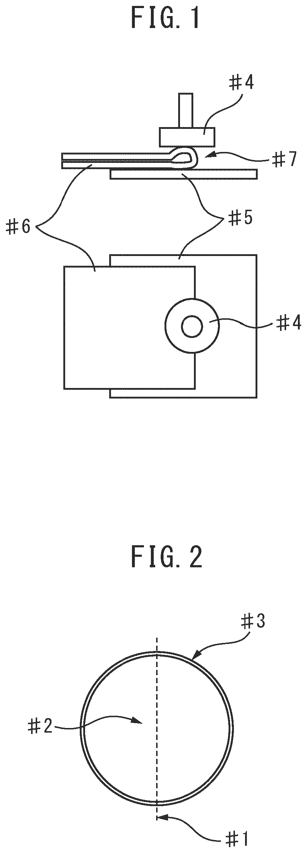

Using a thickness gauge (FFA-10 manufactured by Ozaki MFG. Co., Ltd), the thickness when the airbag base cloth is overlapped in two is measured in accordance with JIS L1019. Next, the airbag base cloth is cut to a width of 5 cm and a length of 10 cm to prepare a sample piece. The sample piece is then folded once in the length direction so that the film surface or the silicone surface is on the inside, and the fold part of the sample piece is sandwiched under a 3 cm × 6 cm metal plate, and a weight is arranged thereon for 30 seconds so that the total weight including the metal plate is 10 kg. Thereafter, using the same thickness gauge, as shown in FIG. 1, the measurement probe is set so that the fold part is aligned with the center line of the measurement probe of the film thickness gauge, and the stabilized value after 1 minute had elapsed is measured. The value obtained by dividing the two layer overlapped thickness by the thickness of this fold part is calculated. This measurement is performed 5 times in each of the warp and weft directions, and the average value is taken as the ratio of the two layer overlap thickness of the base cloth to the thickness of the fold part.

(10) High-Pressure Air Permeability at 300 kPa

Using a capillary flow promoter CFP-1200AEX (manufactured by Porous Materials, Inc.), the multilayer film surface or silicone surface of the airbag base cloth is set so as to be on the pressurized side, and the air permeation amount at 300 KPa is measured in a gas permeability test mode. This measurement is performed 5 times, and the average value is set as the high-pressure air permeability at 300 kPa.

(11) Static Air Permeability After Sewing Machine Needle Piercing

An organ needle DPx17 (#21) is attached to an LSC-8BL-1 manufactured by Seiko Sewing Machine Co., Ltd., and needle holes are made in a straight line without sewing thread so that the pitch was 50 pierces/10 cm, and a sample as shown in FIG. 2 is prepared. The needle hole line is set as the center of the measurement diameter of the static air permeability measuring machine (Frazier Permeator FP-2 manufactured by Toyo Seiki Seisaku-sho), and so that the film side or silicone side of the airbag base cloth is on the pressure side, the air permeability at 500 Pa is measured 5 times in accordance with ISO9237, and the average value is set as the static air permeability after sewing machine needle piercing.

(12) Base Cloth Cross-Sectional Thickness Ratio (B/A)

As shown in FIG. 3, on the surface where the multilayer film of the airbag base cloth is covered, the exposed warp is cut at the center of the exposed part in the warp direction, and the cross-section of the base cloth is observed with a scanning electron microscope (VE-9800 manufactured by KEYENCE Corp.). FIG. 4 is a schematic view of a cross-section of the base cloth at this time. In the center (13) of both ends of the width direction warp (12, 12' in FIG. 4), when A is the distance from the bottom of the yarn to the surface of the multilayer film, and B is the distance from the surface of the multilayer film at the widthwise end (12 or 12') of the warp to the surface height of the multilayer film in the width direction center, B/A is measured. The result is the average value of the numerical values measured 5 times. Furthermore, five measurement points apart from each other at a distance of at least 10 cm or more are measured. For both ends (12 or 12') in the width direction of the warp, the position of the left side surface of the warp cross-section on the leftmost side in the captured SEM image is 12 and the position of the right side surface of the warp cross section on the rightmost side is 12'.

(13) Internal Pressure Retention of Airbag

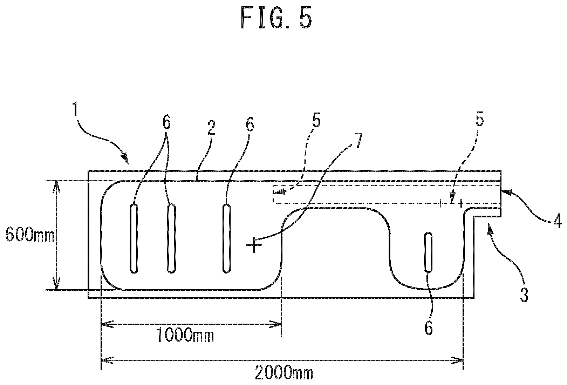

A side curtain airbag having the shape shown in FIG. 5 and having a capacity of 24 L is sewn with two rows of lock stitches with a sewing thread having a fineness of 1400 dtex, a stich number of 5.0 stitches/cm, and a width of 4 mm.
An inner tube is inserted into the side curtain airbag to guide the deployment gas from the gas supply port at the rear end to the front inflated part and the rear inflated part. For the inner tube, a plain weave cloth of 38 threasds/inch (2.54 cm) is used for both warp and weft using polyamide 6/6 fibers having a fineness of 700 dtex/105 f. This cloth is sewn into a tubular shape with a diameter that allows the gas supply port to be inserted therein, with a sewing thread of 1400 dtex, a stich number of 5.0 stitches/cm, and two rows of lock stitches having a width of 4 mm. The tip of the inner tube serves as an opening, the sewn part is on the upper side, and the gas supply cutout of the rear inflated part is provided on the lower side.
A pressure sensor is attached to the center of the protection part of the side curtain airbag. Thereafter, it is installed in a holding rack in a curtain shape without folding, and a 2.0 mol stored gas inflator is attached to the gas supply port with a hose band and deployed. The internal pressure retention rate (200 msec internal pressure/50 msec internal pressure $\times$ 100) when 50 msec to 200 msec had elapsed is determined in accordance the following evaluation criteria.

<Evaluation Criteria>

Internal pressure retention rate of 80% to 100%: Excellent
Internal pressure retention rate of 50% to 79%: Good
Internal pressure retention rate of 0 to 49%: Poor

(14) Melting Point of Film Raw Material

A sheet having a thickness of 150 $\mu$m is produced with a press molding machine "P2-30T-400" manufactured by Toyo Seiki Seisaku-sho, and using a DSC ("Diamond DSC" manufactured by PerkinElmer, Inc.), the melting peak temperature obtained at a heating rate of 10 °C/min is defined as the melting point. As the press molding conditions, samples were taken according to the conditions below.

(15) Glass Transition Temperature of Film Raw Material

A sheet having a thickness of 0.9 mm is prepared with a press molding machine "P2-30T-400" manufactured by Toyo Seiki Seisaku-sho, the loss tangent tan $\delta$ is measured with a dynamic viscoelasticity measuring machine ("MCR301" manufactured by Anton Paar GmbH) under the conditions below, and the peak temperature of the loss tangent tan $\delta$ is defined as the glass transition temperature

- Measurement mode: torsion (measurement attachment: SRF10)
- Sample: thickness = 0.9 mm; width = 10 mm; measurement span = 38 mm
- Normal force: -0.3N
- Oscillation angle: 0.1%
- Frequency: 1 Hz
- Temperature rise rate: 2 °C/min

[Example 1]

(Multilayer Film)

The film was a four-type five-layer multilayer film having a film structure (mass%) of "adhesive layer (20%)/glue layer (10%)/intermediate layer (50%)/glue layer (10%)/outer layer (10%). 11% by mass of CoPA1 (trade name "Ube Nylon 7128B" (manufactured by Ube Industries, Ltd.) copolymerized polyamide 6/12 (Tg = 47 °C, Tm = 128 °C)), 49% by mass of m-PE (trade name "Admer NF587" (manufactured by Mitsui Chemicals, Inc.) acid-modified polyethylene (Tg = -24 °C, Tm = 121 °C)), 10% by mass of a masterbatch (base resin: CoPA1) containing the crystal nucleating agent "Microace P-8", and 30% by mass of a masterbatch (base resin: CoPA1) containing the anti-blocking agent "Silton JC-70" were collected and used in the adhesive layer as a dry-blended raw material. The CoPA1 contained in the adhesive layer (100% by mass) was 49% by mass (including the base resin-derived material), the crystal nucleating agent was 0.5% by mass, and the anti-blocking agent was 1.5% by mass. A raw material in which LLDPE and OBC were dry-blended each at 50% by mass was used for the intermediate layer, m-PE was used for the glue layer, H-TPAE was used for the outer layer, and they were extruded from a multilayer circular die, whereby a multilayer film having a thickness of 10 $\mu$m by the inflation method.

A plain weave cloth was woven with a water jet loom using nylon 66 raw yarns having a fineness of 470 dtex and a filament number of 136, and then refined and dried.

(Calendering and Lamination)

Using a heater roller and a resin roller, one surface of the fabric was flattened by calendering under the conditions of a temperature of 135 °C and a linear pressure of 2.0 kN/cm.

The multilayer film was then laminated on the fabric side that had been flattened, and bonded by laminating. The laminating conditions at this time were as follows.

- Temperature: 160 °C
- Roller speed: 15 m/min
- Linear pressure: 0.5 kN/cm

The warp and weft weaving density of the obtained base cloth was 49 threads/inch (1 inch = 2 .5 4 cm), and the weight of the multilayer film was 10 g/m$^2$. Other base cloth physical characteristics are shown in Table 1 below.

[Example 2]

A base cloth was produced in the same manner as Example 1 except that the warp and weft weaving density of the base cloth was 46 threads/inch (1 inch = 2.54 cm) and the weight of the multilayer film was 20 g/m . The physical characteristics of the obtained base cloth are shown in Table 1 below.

[Example 3]

A base cloth was produced in the same manner as Example 1 except that the weight of the multilayer film was 30 g/m$^2$. The physical characteristics of the obtained base cloth are shown in Table 1 below.

[Example 4]

A base cloth was produced in the same manner as Example 1 except that the warp and weft weaving density of the base cloth was 54 threads/inch (1 inch = 2.54 cm). The physical characteristics of the obtained base cloth are shown in Table 1 below.

[Example 5]

A base cloth was produced in the same manner as Example 1 except that the filament number of the raw yarn was 72, the warp and weft weaving density of the base cloth was 46 threads/inch (1 inch = 2.54 cm), and the weight of the multilayer film was 20 g/m$^2$. The physical characteristics of the obtained base cloth are shown in Table 1 below.

[Example 6]

A base cloth was produced in the same manner as Example 1 except that the fineness of the raw yarn was 350 dtex, the warp and weft weaving density of the base cloth was 58 threads/inch (1 inch = 2.54 cm), and the weight of the multilayer film was 20 g/m$^2$. The physical characteristics of the obtained base cloth are shown in Table 1 below.

[Example 7]

A base cloth was produced in the same manner as Example 1 except that the fineness of the raw yarn was 350 dtex, the warp and weft weaving density of the base cloth was 60 threads/inch (1 inch = 2.54 cm), and the weight of the multilayer film was 30 g/m$^2$. The physical characteristics of the obtained base cloth are shown in Table 1 below.

[Example 8] (not in accordance with the invention as claimed)

A base cloth was produced in the same manner as Example 1 except that the linear pressure during fabric calendering was 0.8 kN/cm and the warp and weft weaving density of the base cloth was 46 threads/inch (1 inch = 2.54 cm). The physical characteristics of the obtained base cloth are shown in Table 2 below.

[Example 9]

A base cloth was produced in the same manner as Example 1 except that the linear pressure during fabric calendering was 5.0 kN/cm and the weight of the multilayer film was 20 g/m$^2$. The physical characteristics of the obtained base cloth are shown in Table 2 below.

[Example 10]

A base cloth was produced in the same manner as Example 1 except that the weight of the multilayer film was 50 g/m$^2$. The physical characteristics of the obtained base cloth are shown in Table 2 below.

[Example 11]

A base cloth was produced in the same manner as Example 1 except that the linear pressure during fabric calendering was 10 kN/cm and the weight of the multilayer film was 20 g/m$^2$. The physical characteristics of the obtained base cloth are shown in Table 2 below.

[Example 12]

A base cloth was produced in the same manner as Example 1 except that calendering was performed once each on the front and back of the fabric under the conditions of a temperature of 135 °C, a linear pressure of 2.0 kN/cm, and a rate of 15 m/min so that both sides of the fabric were flattened, and the weight of the multilayer film was 30 g/m$^2$. The physical characteristics of the obtained base cloth are shown in Table 2 below.

[Example 13]

A base cloth was produced in the same manner as Example 2 except that 60% by mass of L-TPAE1 (trade name "UBESTA XPA 9055F1" (manufactured by Ube Industries, Ltd.) low melting point thermoplastic polyamide elastomer (Tg = -4 °C, Tm = 164 °C)), 10% by mass of a masterbatch (base resin: L-TPAE1) containing the crystal nucleating agent "Microace P-8", and 30% by mass of a masterbatch (base resin: L-TPAE1) containing the anti-blocking agent "Silton JC-70" were collected and used as a dry-blended raw material in the adhesive layer. Note that the L-TPAE1 contained in the adhesive layer (100% by mass) was 98% by mass (including the base resin-derived material), the crystal nucleating agent was 0.5% by mass, and the anti-blocking agent was 1.5% by mass. The physical characteristics of the obtained base cloth are shown in Table 2 below.

[Example 14] (not in accordance with the invention as claimed)

A base cloth was produced in the same manner as Example 2 except that 60% by mass of L-TPAE2 (trade name "UBESTA XPA 9040F1" (manufactured by Ube Industries, Ltd.) low melting point thermoplastic polyamide elastomer (Tg = -43 °C, Tm = 133 °C)), 10% by mass of a masterbatch (base resin: L-TPAE2) containing the crystal nucleating agent "Microace P-8", and 30% by mass of a masterbatch (base resin: L-TPAE2) containing the anti-blocking agent "Silton JC-70" were collected and used as a dry-blended raw material in the adhesive layer. Note that the L-TPAE2 contained in the adhesive layer (100% by mass) was 98% by mass (including the base resin-derived material), the crystal nucleating agent was 0.5% by mass, and the anti-blocking agent was 1.5% by mass. The physical characteristics of the obtained base cloth are shown in Table 2 below.

[Comparative Example 1]

A base cloth was produced in the same manner as Example 1 except that the fabric was not flattened by calendering, the weaving density of the base cloth was 46 threads/inch (1 inch = 2.54 cm), and the weight of the multilayer film was 20 g/m$^2$. The physical characteristics of the obtained base cloth are shown in Table 3 below.
The obtained base cloth had insufficient adhesion between the fabric and the multilayer film, whereby gas leakage from the base cloth and sewn part was significant, and the internal pressure retention during air bag deployment was insufficient.

[Comparative Example 2]

A base cloth was produced in the same manner as Example 1 except that the fabric was not flattened by calendering, the weight of the multilayer film was 10 g/m$^2$, and the linear pressure during lamination was 1.8 kN/cm. The physical characteristics of the obtained base cloth are shown in Table 3 below.
In Comparative Example 2, the linear pressure due to lamination was high, whereby pinholes were generated in the film, and the internal pressure retention at the time of air bag deployment was insufficient.

[Comparative Example 3]

A base cloth was produced in the same manner as Example 1 except that the fabric was not flattened by calendering and the weight of the multilayer film was 45 g/m$^2$. The physical characteristics of the obtained base cloth are shown in Table 3 below.
The obtained base cloth had a high weight, poor foldability, and insufficient internal pressure retention during air bag deployment.

[Comparative Example 4]

A base cloth was produced in the same manner as Example 1 except that the linear pressure during fabric calendering was 0.2 kN/cm, the warp and weft weaving density of the base cloth was 46 yarns/inch (1 inch = 2.54 cm), and the weight of the multilayer film was 20 g/m$^2$. The physical characteristics of the obtained base cloth are shown in Table 3 below.
In the obtained base cloth, the linear pressure of the calendering was low, whereby the flattening of the fabric was insufficient, and a suitable internal pressure retention of the airbag could not be obtained.

[Comparative Example 5]

Nylon 66 yarns having a fineness of 470 dtex and a filament number of 136 yarns were woven, refined and dried by a water jet loom. Thereafter, silicone was applied thereto with a knife, and the silicone was crosslinked by heat treatment to prepare a coated base cloth. The warp and weft weaving density of the obtained base cloth was 46 yarns/inch (1 inch = 2.54 cm), and the weight of the silicone resin was 25 g/m$^2$. Other physical characteristics of the base cloth are shown in Table 3 below.

The obtained base cloth had significant gas leakage due to opening of the base cloth and the sewn part, and the internal pressure retention at the time of air bag deployment was insufficient.

[Comparative Example 6]

A base cloth was produced in the same manner as Example 2 except that 60% by mass of m-PE (trade name "Admer NF587" (manufactured by Mitsui Chemicals, Inc.) acid-modified polyethylene (Tg = -24 °C, Tm = 121 °C)), 10% by mass of a masterbatch (base resin: m-PE) containing the crystal nucleating agent "Microace P-8", and 30% by mass of a masterbatch (base resin: m-PE) containing the anti-blocking agent "Silton JC-70" were collected and used as a dry-blended raw material in the adhesive layer. Note that the m-PE contained in the adhesive layer (100% by mass) was 98% by mass (including the base resin-derived material), the crystal nucleating agent was 0.5% by mass, and the anti-blocking agent was 1.5% by mass. The physical characteristics of the obtained base cloth are shown in Table 3 below.

[Example 15]

Needle holes were formed in a base cloth prepared in the same manner as in Example 1 with a sewing machine, and the results of static air permeability measurement are shown in Table 4 below.

[Example 16]

Needle holes were formed in a base cloth prepared in the same manner as in Example 8 with a sewing machine, and the results of static air permeability measurement are shown in Table 4 below.

[Comparative Example 7]

Needle holes were formed in a base cloth prepared in the same manner as in Example 3 with a sewing machine, and the results of static air permeability measurement are shown in Table 4 below.

The obtained base cloth had some film peeling due to the sewing machine needle, whereby the air permeability was deteriorated.

[Table 1]

| | Item | Unit | Ex 1 | Ex 2 | Ex 3 | Ex 4 | Ex 5 | Ex 6 | Ex 7 |
|---|---|---|---|---|---|---|---|---|---|
| Film | Outer layer | - | H-TPAE (100%) | | | | | | |
| | Glue layer | - | m-PE (100%) | | | | | | |
| | Intermediate layer | - | LLDPE (50%) | | | | | | |
| | | - | OBC (50%) | | | | | | |
| | Glue layer | - | m-PE (100%) | | | | | | |
| | Adhesive layer | - | CoPA1 (49%, Tg: 47 °C) | | | | | | |
| | | - | m-PE (49%, Tg: -24 °C) | | | | | | |
| | | - | AB agent (1.5) | | | | | | |
| | | - | NA agent (0.5) | | | | | | |
| Fabric calendering conditions | Temp | °C | 135 | 135 | 135 | 135 | 135 | 135 | 135 |
| | Linear Pressure | kN/cm | 2.0 | 2.0 | 2.0 | 2.0 | 2.0 | 2.0 | 2.0 |
| | Calendered surface | - | One surface | One surface | One surface | One surface | One surface | One surface | One surface |
| Film lamination conditions | Temp | °C | 160 | 160 | 160 | 160 | 160 | 160 | 160 |
| | Linear Pressure | kN/cm | 0.5 | 0.5 | 0.5 | 0.5 | 0.5 | 0.5 | 0.5 |
| | Coating | - | film | film | film | film | film | film | film |
| Physical characteristics of constituent yarns of base cloth | Fineness | dtex | 478 | 478 | 478 | 478 | 478 | 356 | 356 |
| | Filament no. | yarns | 136 | 136 | 136 | 136 | 72 | 136 | 136 |
| | Filament fineness | dtex | 3.5 | 3.5 | 3.5 | 3.5 | 6.6 | 2.6 | 2.6 |

(continued)

| | Item | Unit | Ex 1 | Ex 2 | Ex 3 | Ex 4 | Ex 5 | Ex 6 | Ex 7 |
|---|---|---|---|---|---|---|---|---|---|
| Base cloth physical characteristics | Weight of film (silicone) | $g/m^2$ | 10 | 20 | 30 | 10 | 20 | 20 | 30 |
| | Weight of base cloth | $g/m^2$ | 215 | 205 | 235 | 235 | 205 | 195 | 215 |
| | Weaving density (warp) | /inch * | 49 | 46 | 49 | 54 | 46 | 58 | 60 |
| | Weaving density (weft) | /inch * | 49 | 46 | 49 | 54 | 46 | 58 | 60 |
| | Cover factor | - | 2143 | 2011 | 2143 | 2361 | 2011 | 2189 | 2264 |
| | Base fabric cross-sectional thickness ratio B/A | - | 0.43 | 0.34 | 0.26 | 0.39 | 0.36 | 0.38 | 0.3 |
| | Edgecomb Resistance (warp/weft average) | N/2.5 cm | 450 | 540 | 570 | 480 | 510 | 540 | 560 |
| | Scrub after high temp/high humidity treatment (warp/weft average) | repetitions | 1000 | 1000 | 1000 | 1000 | 1000 | 1000 | 1000 |
| | Fold part thickness/two layer overlapped thickness (warp/weft average) | - | 1.30 | 1.35 | 1.67 | 1.86 | 1.61 | 1.50 | 1.78 |
| | 300 kPa air permeability | $L/dm^2/min$ | 0.68 | 0.51 | 0.34 | 0.61 | 0.59 | 0.47 | 0.42 |
| Deployment evaluation | Internal pressure retention | - | Excellent | Excellent | Excellent | Excellent | Excellent | Excellent | Excellent |
| * 1 inch = 2.54 cm | | | | | | | | | |

[Table 2]

| | Item | Unit | Ex 8* * | Ex 9 | Ex 10 | Ex 11 | Ex 12 | Ex 13 | Ex 14* * |
|---|---|---|---|---|---|---|---|---|---|
| Film | Outer layer | - | H-TPAE (100%) | | | | | | |
| | Glue layer | - | m-PE (100%) | | | | | | |
| | Intermediate layer | - | LLDPE (50%) | | | | | | |
| | | - | OBC (50%) | | | | | | |
| | Glue layer | - | m-PE (100%) | | | | | | |
| | Adhesive layer | - | CoPA1 (49%, Tg: 47 °C) | | | | | L-TPAE1 (98%, Tg: - 4 °C) | L-TPAE2 (98%, Tg: - 43 °C) |
| | | - | m-PE (49%, Tg: -24 °C) | | | | | AB agent (1.5) | AB agent (1.5) |
| | | - | AB agent (1.5) | | | | | NA agent (0.5) | NA agent (0.5 |
| | | - | NA agent (0.5) | | | | | | |
| Fabric calendering conditions | Temp | °C | 135 | 135 | 135 | 135 | 135 | 135 | 135 |
| | Linear Pressure | kN/cm | 0.8 | 5.0 | 2.0 | 10.0 | 2.0 | 2.0 | 2.0 |
| | Calendered surface | - | One surface | One surface | One surface | One surface | Both surfaces | One surface | One surface |
| Film lamination conditions | Temp | °C | 160 | 160 | 160 | 160 | 160 | 160 | 160 |
| | Linear Pressure | kN/cm | 0.5 | 0.5 | 0.5 | 0.5 | 0.5 | 0.5 | 0.5 |
| | Coating | - | film | film | film | film | film | film | film |
| Physical characteristics of constituent yarns of base cloth | Fineness | dtex | 478 | 478 | 478 | 478 | 478 | 478 | 478 |
| | Filament no. | yarns | 136 | 136 | 136 | 136 | 136 | 136 | 136 |
| | Filament fineness | dtex | 3.5 | 3.5 | 3.5 | 3.5 | 3.5 | 3.5 | 3.5 |

(continued)

| | Item | Unit | Ex 8* * | Ex 9 | Ex 10 | Ex 11 | Ex 12 | Ex 13 | Ex 14* * |
|---|---|---|---|---|---|---|---|---|---|
| Base cloth physical characteristics | Weight of film (silicone) | g/m² | 10 | 20 | 50 | 20 | 30 | 20 | 20 |
| | Weight of base cloth | g/m² | 195 | 225 | 255 | 225 | 235 | 205 | 205 |
| | Weaving density (warp) | /inch* | 46 | 49 | 49 | 49 | 49 | 46 | 46 |
| | Weaving density (weft) | /inch * | 46 | 49 | 49 | 49 | 49 | 46 | 46 |
| | Cover factor | - | 2011 | 2143 | 2143 | 2143 | 2143 | 2011 | 2011 |
| | Base fabric cross-sectional thickness ratio B/A | - | 0.4 | 0.21 | 0.09 | 0.14 | 0.18 | 0.32 | 0.3 |
| | Edgecomb Resistance (warp/weft average) | N/2.5 cm | 400 | 570 | 580 | 560 | 550 | 510 | 360 |
| | Scrub after high temp/high humidity treatment (warp/weft average) | repetitions | 800 | 1000 | 1000 | 1000 | 1000 | 520 | 190 |
| | Fold part thickness/two layer overlapped thickness (warp/weft average) | - | 1.28 | 1.82 | 2.75 | 2.29 | 2.11 | 2.16 | 2.30 |
| | 300 kPa air permeability | L/dm²/min | 0.89 | 0.38 | 0.29 | 0.30 | 0.33 | 0.97 | 1.22 |
| Deployment evaluation | Internal pressure retention | - | Good | Excellent | Excellent | Excellent | Excellent | Good | Good |

* 1 inch = 2.54 cm [0083] not in accordance with the invention as claimed

[Table 3]

| | | Item | Unit | Comp Ex 1 | Comp Ex 2 | Comp Ex 3 | Comp Ex 4 | Comp Ex 5 | Comp Ex 6 |
|---|---|---|---|---|---|---|---|---|---|
| | Film | Outer layer | - | H-TPAE (100%) | | | | | |
| | | Glue layer | - | m-PE (100%) | | | | | |
| | | Intermediate layer | - | LLDPE (50%) | | | | | |
| | | | - | OBC (50%) | | | | | |
| | | Glue layer | - | m-PE (100%) | | | | | |
| | | Adhesive layer | - | CoPA1 (49%, Tg: 47 °C) | | | | | m-PE (49%, Tg: -24 °C) |
| | | | - | m-PE (49%, Tg: -24 °C) | | | | | AB agent (1.5) |
| | | | - | AB agent (1.5) | | | | | NA agent (0.5) |
| | | | - | NA agent (0.5) | | | | | |
| | Fabric calendering conditions | Temp | °C | - | - | - | 135 | - | 135 |
| | | Linear Pressure | kN/cm | - | - | - | 0.2 | - | 2.0 |
| | | Calendered surface | - | - | - | - | One surface | - | One surface |
| | Film lamination conditions | Temp | °C | 160 | 160 | 160 | 160 | - | 160 |
| | | Linear Pressure | kN/cm | 0.5 | 1.8 | 0.5 | 0.5 | - | 0.5 |
| | | Coating | - | film | film | film | film | silicone | film |
| | Physical characteristics of constituent yarns of base cloth | Fineness | dtex | 478 | 478 | 478 | 478 | 478 | 478 |
| | | Filament no. | yarns | 136 | 136 | 136 | 136 | 136 | 136 |
| | | Filament fineness | dtex | 3.5 | 3.5 | 3.5 | 3.5 | 3.5 | 3.5 |

# EP 4 101 643 B1

(continued)

| | Item | Unit | Comp Ex 1 | Comp Ex 2 | Comp Ex 3 | Comp Ex 4 | Comp Ex 5 | Comp Ex 6 |
|---|---|---|---|---|---|---|---|---|
| Base cloth physical characteristics | Weight of film (silicone) | g/m² | 20 | 10 | 45 | 20 | 25 | 20 |
| | Weight of base cloth | g/m² | 205 | 215 | 250 | 205 | 210 | 205 |
| | Weaving density (warp) | /inch * | 46 | 49 | 49 | 46 | 46 | 46 |
| | Weaving density (weft) | /inch * | 46 | 49 | 49 | 46 | 46 | 46 |
| | Cover factor | - | 2011 | 2143 | 2143 | 2011 | 2011 | 2011 |
| | Base fabric cross-sectional thickness ratio B/A | - | 0.16 | Could not be measured | 0.08 | 0.18 | - | 0.29 |
| | Edgecob Resistance (warp/weft average) | N/2.5 cm | 280 | 315 | 320 | 335 | 230 | 300 |
| | Scrub after high temp/high humidity treatment (warp/weft average) | repetitions | 370 | 700 | 230 | 450 | 1000 | 50 |
| | Fold part thickness/two layer overlapped thickness (warp/weft average) | - | 1.41 | 1.93 | 2.31 | 1.45 | 1.41 | 1.33 |
| | 300 kPa air permeability | L/dm²/min | 1.52 | 2.31 | 1.29 | 1.12 | 1.33 | 1.81 |
| Deployment evaluation | Internal pressure retention | - | Poor | Poor | Poor | Poor | Poor | Poor |

* 1 inch = 2.54 cm

[Table 4]

| | | | Ex 15 (Example 1) | Ex 16 (Example 8) | Comp Ex 7 (Comp Ex 3) |
|---|---|---|---|---|---|
| | Static air permeability after needle piercing | L/dm²/min | 0.17 Excellent | 0.26 Good | 0.67 Poor |

INDUSTRIAL APPLICABILITY

When an airbag cushion is produced with the airbag base cloth according to the present invention, the base cloth and sewn parts do not opened under high pressure, whereby an air bag cushion with excellent airtightness and pressure resistance can be achieved, a lightweight air bag cushion with excellent storability can be achieved, and in particular, an air bag base cloth suitable for use in side curtain airbags, pedestrian airbags, and far side airbags, which require internal pressure retention and storability, can be obtained.

21

DESCRIPTION OF REFERENCE SIGNS

| #1 | sewing machine needle piercing line |
| #2 | needle hole line center |
| #3 | measurement diameter (air permeability evaluation device) |
| #4 | measurement probe |
| #5 | measurement pedestal |
| #6 | base cloth |
| #7 | base cloth fold part |
| 1 | side curtain airbag |
| 2 | sewn part (bag boundary) |
| 3 | inflator attachment part |
| 4 | inner tube |
| 5 | aperture |
| 6 | joint |
| 7 | multilayer film in the center of the protected area |
| 11 | yarn (warp or weft) |
| 12 | yarn width direction end |
| 12' | yarn width direction end |
| 13 | yarn width direction central part |
| A | distance from the bottom of the warp or weft in width direction center to surface of multilayer film |
| B | distance from the surface of multilayer film at warp or weft width direction end to surface height of multilayer film in width direction center |

**Claims**

1. An airbag base cloth in which at least one surface of a fabric is covered with a multilayer film having an adhesive layer, wherein an average value of warp and weft edgecomb resistance of the base cloth, determined as described in the description, is from 450 N/2.5 cm or more to 1000 N/2.5 cm or less, wherein a high-pressure air permeability of 300 kPa of the airbag base cloth, determined as described in the description, is 1.0 L/cm$^2$/min or less, wherein the adhesive layer of the multilayer film contains a polyamide-based resin, and wherein the multi-layer film covering the fabric is composed of at least two layers, of which the layer which adheres to the fabric is the adhesive layer.

2. The airbag base cloth according to claim 1, wherein the ratio of a fold part thickness of the airbag base cloth to a two overlapped cloth thickness, determined as described in the description, (fold part thickness/two overlapped cloth thickness) is 2.0 or less.

3. The airbag base cloth according to claim 1 or 2, wherein the air bag base cloth has a scrub resistance value, determined as described in the description, of 600 strokes or more.

4. The airbag base cloth according to any one of claims 1 to 3, wherein the cover factor of the airbag base cloth, determined as described in the description, is 1800 to 2400.

5. The airbag base cloth according to any one of claims 1 to 4, wherein the static air permeability of the airbag base cloth, determined as described in the description, is 0.30 L/dm$^2$/min or less.

6. The airbag base cloth according to any one of claims 1 to 5, wherein when in the surface of the airbag base cloth covered by the multilayer film, a cross section of exposed warp cut at a warp direction center of the exposed part or a cross section of exposed weft cut at a warp direction center of the exposed part is observed by SEM, the distance from the bottom of the warp or weft in the width direction to the surface of the multilayer film is defined as A, and the distance from the surface of the multilayer film at the widthwise end of the warp or weft to the surface height of the multilayer film in the width direction center is defined as B, a base cloth cross section thickness ratio B/A is 0.2 to 0.6.

7. The airbag base cloth according to any one of claims 1 to 6, wherein a weight of the multilayer film is 5 to 30 g/m$^2$.

8. The airbag base cloth according to any of the preceding claims, wherein the polyamide-based resin is a copolymerized polyamide.

9. The airbag base cloth according to any of the preceding claims, wherein a melting point of the polyamide-based resin is 100 to 160 °C.

10. The airbag base cloth according to any of the preceding claims, wherein a glass transition temperature of the polyamide-based resin is 0 to 80 °C.

11. An airbag comprising the airbag base cloth according to any one of claims 1 to 10.

12. The airbag according claim 11, wherein said airbag is a side curtain airbag.

13. The airbag according claim 11, wherein said airbag is a pedestrian airbag.

14. The airbag according claim 11, wherein said airbag is a far side airbag.


**Patentansprüche**

1. Airbag-Basisstoff, wobei wenigstens eine Fläche eines Textilstoffs mit einer mehrschichtigen Folie bedeckt ist, die eine Klebeschicht aufweist, wobei der Mittelwert der Kammausziehkraft des Basisstoffs in Kett- und Schussrichtung, die so bestimmt wird, wie es in der Beschreibung beschrieben ist, 450 N/2,5 cm oder mehr bis 1000 N/2,5 cm oder weniger beträgt, wobei die Hochdruck-Luftdurchlässigkeit des Airbag-Basisstoffs unter 300 kPa, die so bestimmt wird, wie es in der Beschreibung beschrieben ist, 1,0 l/cm$^2$/min oder weniger beträgt, wobei die Klebeschicht der mehrschichtigen Folie ein Harz auf Polyamidbasis enthält und wobei die mehrschichtige Folie, die den Textilstoff bedeckt, aus wenigstens zwei Schichten besteht, von denen die Schicht, die an dem Textilstoff haftet, die Klebeschicht ist.

2. Airbag-Basisstoff gemäß Anspruch 1, wobei das Verhältnis einer Faltteildicke des Airbag-Basisstoffs zur Dicke eines zweifach überlappten Stoffs, das so bestimmt wird, wie es in der Beschreibung beschrieben ist, (Faltteildicke/Dicke des zweifach überlappten Stoffs) 2,0 oder weniger beträgt.

3. Airbag-Basisstoff gemäß Anspruch 1 oder 2, wobei der Airbag-Basisstoff einen Nassabriebbeständigkeitswert, der so bestimmt wird, wie es in der Beschreibung beschrieben ist, von 600 Scheuerzyklen oder mehr aufweist.

4. Airbag-Basisstoff gemäß einem der Ansprüche 1 bis 3, wobei der Bedeckungsfaktor des Airbag-Basisstoffs, der so bestimmt wird, wie es in der Beschreibung beschrieben ist, 1800 bis 2400 beträgt.

5. Airbag-Basisstoff gemäß einem der Ansprüche 1 bis 4, wobei die statische Luftdurchlässigkeit des Airbag-Basisstoffs, die so bestimmt wird, wie es in der Beschreibung beschrieben ist, 0,30 l/dm$^2$/min oder weniger beträgt.

6. Airbag-Basisstoff gemäß einem der Ansprüche 1 bis 5, wobei dann, wenn in der Oberfläche des Airbag-Basisstoffs, die durch die mehrschichtige Folie bedeckt ist, ein Querschnitt von exponiertem Kettschnitt an einem Kettrichtungszentrum des exponierten Teils oder ein Querschnitt von exponiertem Schussschnitt an einem Kettrichtungszentrum des exponierten Teils durch ein Rasterelektronenmikroskop beobachtet wird und der Abstand von der Unterseite des Kett- oder Schussfadens in der Breitenrichtung zur Oberfläche der mehrschichtigen Folie als A definiert ist und der Abstand von der Oberfläche der mehrschichtigen Folie am breiten Ende des Kett- oder Schussfadens zur Oberflächenhöhe der mehrschichtigen Folie im Zentrum der Breitenrichtung als B definiert ist, dann das Basisstoff-Querschnittsdickenverhältnis B/A 0,2 bis 0,6 beträgt.

7. Airbag-Basisstoff gemäß einem der Ansprüche 1 bis 6, wobei das Gewicht der mehrschichtigen Folie 5 bis 30 g/m$^2$ beträgt.

8. Airbag-Basisstoff gemäß einem der vorstehenden Ansprüche, wobei das Harz auf Polyamidbasis ein copolymerisiertes Polyamid ist.

9. Airbag-Basisstoff gemäß einem der vorstehenden Ansprüche, wobei der Schmelzpunkt des Harzes auf Polyamidbasis 100 bis 160°C beträgt.

**10.** Airbag-Basisstoff gemäß einem der vorstehenden Ansprüche, wobei die Glasübergangstemperatur des Harzes auf Polyamidbasis 0 bis 80°C beträgt.

**11.** Airbag, umfassend den Airbag-Basisstoff gemäß einem der Ansprüche 1 bis 10.

**12.** Airbag gemäß Anspruch 11, wobei der Airbag ein Seitenvorhang-Airbag ist.

**13.** Airbag gemäß Anspruch 11, wobei der Airbag ein Fußgänger-Airbag ist.

**14.** Airbag gemäß Anspruch 11, wobei der Airbag ein Rückseiten-Airbag ist.

**Revendications**

1. Textile de base pour coussin gonflable de sécurité dans lequel au moins une surface d'une étoffe est recouverte d'un film multicouche ayant une couche adhésive, dans lequel la valeur moyenne de la résistance à l'effilochage en chaîne et trame du textile de base, déterminée comme décrit dans la description, est de 450 N/2,5 cm ou plus à 1 000 N/2,5 cm ou moins, dans lequel la perméabilité à l'air sous pression élevée de 300 kPa du textile de base pour coussin gonflable de sécurité, déterminée comme décrit dans la description, est de 1,0 l/cm$^2$/min ou moins, dans lequel la couche adhésive du film multicouche contient une résine à base de polyamide, et dans lequel le film multicouche couvrant l'étoffe est composé d'au moins deux couches, parmi lesquelles la couche qui adhère à l'étoffe est la couche adhésive.

2. Textile de base pour coussin gonflable de sécurité selon la revendication 1, dans lequel le rapport de l'épaisseur d'une partie pliée du textile de base pour coussin gonflable de sécurité à l'épaisseur du textile en superposition double, déterminé comme décrit dans la description (épaisseur de partie pliée / épaisseur de textile en superposition double) est de 2,0 ou moins.

3. Textile de base pour coussin gonflable de sécurité selon la revendication 1 ou 2, lequel textile de base pour coussin gonflable de sécurité a une valeur de résistance au frottement, déterminée comme décrit dans la description, de 600 passages ou plus.

4. Textile de base pour coussin gonflable de sécurité selon l'une quelconque des revendications 1 à 3, dans lequel le facteur de couverture du textile de base pour coussin gonflable de sécurité, déterminé comme décrit dans la description, est de 1 800 à 2 400.

5. Textile de base pour coussin gonflable de sécurité selon l'une quelconque des revendications 1 à 4, dans lequel la perméabilité à l'air statique du textile de base pour coussin gonflable de sécurité, déterminée comme décrit dans la description, est de 0,30 l/dm$^2$/min ou moins.

6. Textile de base pour coussin gonflable de sécurité selon l'une quelconque des revendications 1 à 5, dans lequel quand, dans la surface du textile de base pour coussin gonflable de sécurité recouverte par le film multicouche, la section transversale de la chaîne exposée coupée au centre dans la direction de la chaîne de la partie exposée, ou la section transversale de la trame exposée coupée au centre dans la direction de la chaîne de la partie exposée, est observée au MEB, la distance allant de la partie inférieure de la chaîne ou trame dans la direction de la largeur à la surface du film multicouche est définie par A, et la distance allant de la surface du film multicouche au niveau de l'extrémité dans le sens de la largeur de la chaîne ou trame à la hauteur en surface du film multicouche dans le centre dans la direction de la largeur est définie par B, le rapport d'épaisseur en section transversale du textile de base B/A est de 0,2 à 0,6.

7. Textile de base pour coussin gonflable de sécurité selon l'une quelconque des revendications 1 à 6, dans lequel le grammage du film multicouche est de 5 à 30 g/m$^2$.

8. Textile de base pour coussin gonflable de sécurité selon l'une quelconque des revendications précédentes, dans lequel la résine à base de polyamide est un polyamide copolymérisé.

9. Textile de base pour coussin gonflable de sécurité selon l'une quelconque des revendications précédentes, dans lequel le point de fusion de la résine à base de polyamide est de 100 à 160°C.

10. Textile de base pour coussin gonflable de sécurité selon l'une quelconque des revendications précédentes, dans lequel la température de transition vitreuse de la résine à base de polyamide est de 0 à 80°C.

11. Coussin gonflable de sécurité comprenant le textile de base pour coussin gonflable de sécurité selon l'une quelconque des revendications 1 à 10.

12. Coussin gonflable de sécurité selon la revendication 11, lequel coussin gonflable de sécurité est un coussin gonflable de sécurité formant rideau latéral.

13. Coussin gonflable de sécurité selon la revendication 11, lequel coussin gonflable de sécurité est un coussin gonflable de sécurité pour piéton.

14. Coussin gonflable de sécurité selon la revendication 11, lequel coussin gonflable de sécurité est un coussin gonflable de sécurité pour choc latéral lointain.

# FIG. 1

#4

#7

#6

#5

#4

# FIG. 2

#3

#2

#1

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005535488 W
- JP 2008150754 A
- WO 2018204154 A1
- JP 2009062643 A
- KR 20140070444 A